(19) Europäisches Patentamt
European Patent Office
Office européen des brevets

(11) EP 2 776 141 B1

(12) **FASCICULE DE BREVET EUROPEEN**

(45) Date de publication et mention de la délivrance du brevet:
**18.04.2018 Bulletin 2018/16**

(21) Numéro de dépôt: **12779097.0**

(22) Date de dépôt: **28.09.2012**

(51) Int Cl.:
***B01D 53/14*** *(2006.01)*

(86) Numéro de dépôt international:
**PCT/FR2012/000388**

(87) Numéro de publication internationale:
**WO 2013/068656 (16.05.2013 Gazette 2013/20)**

# (54) PROCÉDÉ D'ÉLIMINATION DE COMPOSES ACIDES D'UN EFFLUENT GAZEUX AVEC UNE SOLUTION ABSORBANTE A BASE DE DIHYDROXYALKYLAMINES POSSÉDANT UN ENCOMBREMENT STÉRIQUE SÉVÈRE DE L'ATOME D'AZOTE

VERFAHREN ZUR ENTFERNUNG VON SÄUREVERBINDUNGEN AUS EINEM ABGASSTROM MITHILFE EINER ABSORPTIONSLÖSUNG AUS DIHYDROXYALKYLAMINEN MIT SCHWERER STERISCHER HINDERUNG DES STICKSTOFFATOMS

METHOD FOR ELIMINATING ACIDIC COMPOUNDS FROM A GASEOUS EFFLUENT USING AN ABSORBENT SOLUTION MADE FROM DIHYDROXYALKYLAMINES HAVING A SEVERE STERIC ENCUMBRANCE OF THE NITROGEN ATOM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.11.2011 FR 1103409**

(43) Date de publication de la demande:
**17.09.2014 Bulletin 2014/38**

(73) Titulaire: **IFP Energies nouvelles**
**92500 Rueil-Malmaison (FR)**

(72) Inventeurs:
- **DELFORT, Bruno**
  **75005 Paris (FR)**
- **LE PENNEC, Dominique**
  **78910 Orgerus (FR)**
- **GRANDJEAN, Julien**
  **69008 Lyon (FR)**

(56) Documents cités:

| | |
|---|---|
| **EP-A- 0 087 208** | **EP-A2- 2 468 385** |
| **WO-A1-2011/121633** | **FR-A1- 2 380 062** |
| **GB-A- 1 238 696** | **GB-A- 2 191 419** |
| **KR-A- 20110 001 741** | **US-A- 4 217 237** |
| **US-A- 4 405 581** | **US-A- 4 405 811** |
| **US-B2- 8 034 166** | |

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 776 141 B1

## Description

La présente invention concerne le domaine des procédés de désacidification d'un effluent gazeux. L'invention s'applique avantageusement au traitement de gaz d'origine industrielle et du gaz naturel.

On utilise couramment des procédés d'absorption mettant en oeuvre une solution aqueuse d'amines, pour retirer les composés acides (notamment le $CO_2$, l'$H_2S$, le COS, le $CS_2$, le $SO_2$ et les mercaptans) présents dans un gaz. Le gaz est désacidifié par mise en contact avec la solution absorbante, puis la solution absorbante est régénérée thermiquement. Par exemple le document US 6 852 144 décrit une méthode d'élimination des composés acides des hydrocarbures. La méthode utilise une solution absorbante eau-N-méthyldiéthanolamine ou eau-triéthanolamine contenant une forte proportion d'un composé appartenant au groupe suivant : pipérazine et/ou méthylpipérazine et/ou morpholine.

Une limitation des solutions absorbantes couramment utilisées dans des applications de désacidification est une sélectivité insuffisante d'absorption de l'$H_2S$ par rapport au $CO_2$. En effet, dans certains cas de désacidification du gaz naturel, on recherche une élimination sélective de l'$H_2S$ en limitant au maximum l'absorption du $CO_2$. Cette contrainte est particulièrement importante pour des gaz à traiter contenant déjà une teneur en $CO_2$ inférieure ou égale à la spécification désirée. On recherche alors une capacité d'absorption de $H_2S$ maximale avec une sélectivité maximale d'absorption de $H_2S$ vis-à-vis du $CO_2$. Cette sélectivité permet de maximiser la quantité de gaz traité et de récupérer un gaz acide en sortie de régénérateur ayant une concentration la plus élevée possible en $H_2S$ ce qui limite la taille des unités de la chaîne soufre en aval du traitement et garantit un meilleur fonctionnement. Dans certains cas, une unité d'enrichissement en $H_2S$ est nécessaire pour concentrer en $H_2S$ le gaz acide. Dans ce cas, on recherche également l'amine la plus sélective. Des amines tertiaires, comme la N-méthyldiéthanolamine, ou encombrées présentant une cinétique de réaction lente avec le $CO_2$ sont couramment utilisées, mais présentent des sélectivités limitées à des taux de charge en $H_2S$ élevés.

Une autre limitation des solutions absorbantes couramment utilisées dans des applications de désacidification totale est une cinétique de captage du $CO_2$ ou du COS trop lente. Dans le cas où les spécifications désirées sur le $CO_2$ ou en COS sont très poussées, on recherche une cinétique de réaction la plus rapide possible de manière à réduire la hauteur de la colonne d'absorption, cet équipement sous pression, typiquement entre 20 et 90 bars, représentant une part importante des coûts d'investissements du procédé.

Que l'on recherche une cinétique de captage du $CO_2$ et du COS maximale dans une application de désacidification totale, ou une cinétique de captage du $CO_2$ minimale dans une application sélective, on désire toujours utiliser une solution absorbante ayant la capacité cyclique la plus grande possible. Cette capacité cyclique, notée $\Delta\alpha$ correspond à la différence de taux de charge ($\alpha$ désignant le nombre de moles de composés acides absorbés $n_{gaz}$ acide par kilogramme de solution absorbante) entre la solution absorbante alimentant la colonne d'absorption et la solution absorbante soutirée en fond de ladite colonne. En effet, plus la solution absorbante a une forte capacité cyclique, plus le débit de solution absorbante qu'il faut mettre en oeuvre pour désacidifier de gaz à traiter est restreint. Dans les procédés de traitement de gaz, la réduction du débit de solution absorbante a également un fort impact sur la réduction des investissements, notamment au niveau du dimensionnement de la colonne d'absorption.

Un autre aspect primordial des opérations de traitement de gaz ou fumées industrielles par solvant reste la régénération de l'agent de séparation. En fonction du type d'absorption (physique et/ou chimique), on envisage généralement une régénération par détente, et/ou par distillation et/ou par entraînement par un gaz vaporisé appelé "gaz de strippage".

Une autre limitation des solutions absorbantes couramment utilisées aujourd'hui est une consommation énergétique nécessaire à la régénération du solvant qui est trop importante. Ceci est particulièrement vrai dans le cas où la pression partielle de gaz acides est faible. Par exemple, pour une solution aqueuse de 2-aminoéthanol (ou monoéthanolamine ou éthanolamine ou MEA) à 30% poids utilisée pour le captage du $CO_2$ en post-combustion dans une fumée de centrale thermique, où la pression partielle de $CO_2$ est de l'ordre de 0,12 bar, l'énergie de régénération représente 3,7 GJ environ par tonne de $CO_2$ captée. Une telle consommation énergétique représente un coût opératoire considérable pour le procédé de captage du $CO_2$.

Il est bien connu de l'homme du métier que l'énergie nécessaire à la régénération par distillation d'une solution d'amine peut se décomposer selon trois postes différents : l'énergie nécessaire pour réchauffer le solvant entre la tête et le fond du régénérateur, l'énergie nécessaire pour abaisser la pression partielle de gaz acide dans le régénérateur par vaporisation d'un gaz de strippage, et enfin l'énergie nécessaire pour casser la liaison chimique entre l'amine et le $CO_2$.

Ces deux premiers postes sont inversement proportionnels aux débits de solution absorbante qu'il est nécessaire de faire circuler dans l'unité pour réaliser une spécification donnée. Pour diminuer la consommation énergétique associée à la régénération du solvant, il est donc préférable encore une fois de maximiser la capacité cyclique du solvant.

Il est difficile de trouver des composés, ou une famille de composés, permettant aux différents procédés de désacidification de fonctionner à moindres coûts opératoires (dont l'énergie de régénération) et d'investissements (dont le coût de la colonne d'absorption).

Il est bien connu de l'homme du métier que les amines tertiaires ou les amines secondaires avec un encombrement stérique sévère ont une cinétique de captage du $CO_2$ plus lente que des amines primaires ou secondaires peu encombrées. En revanche, les amines tertiaires ou secondaires avec un encombrement stérique sévère ont une cinétique de captage de l'$H_2S$ instantanée, ce qui permet de réaliser une élimination sélective de l'$H_2S$ basée sur des performances cinétiques distinctes.

Parmi les applications des amines secondaires avec un encombrement stérique sévère, le document US 4,405,581 décrit un procédé d'absorption sélective de gaz sulfurés par un absorbant contenant des monoamines secondaires possédant un encombrement stérique sévère dont au moins un des substituants est un groupement hydroxyalkyle.

Le document US 4,405,811 décrit un procédé d'élimination sélective de l'$H_2S$ dans des gaz contenant de l'$H_2S$ et du $CO_2$ par un absorbant contenant des monoamines tertiaires possédant un encombrement stérique sévère dont au moins un des substituants est un groupement hydroxyalkyle. Le document WO 2011/121633 divulgue un procédé d'élimination des composés acides contenus dans un effluent gazeux mettant en oeuvre une solution aqueuse comprenant par exemple de la bis(2-hydroxy-1-méthyléthyl)amine, qui comporte la présence de deux groupes méthyles, chacun de ceux deux groupes méthyles étant liés à un atome de carbone situé de part et d'autre en alpha et alpha' de l'atome d'azote. Les inventeurs ont découvert que les monoamines tertiaires ou secondaires possédant un encombrement stérique sévère dont au moins un des substituants est un groupement hydroxyalkyle ne sont pas équivalentes en terme de performances pour leur usage dans des formulations de solution absorbante pour le traitement de gaz acides dans un procédé industriel.

La présente invention a pour objet l'utilisation de monoamines tertiaires ou secondaires possédant un encombrement stérique sévère et appartenant à la famille des di-(hydroxyalkyl)-monoamines.

De manière générale, la présente invention décrit un procédé d'élimination des composés acides contenus dans un effluent gazeux, dans lequel on effectue une étape d'absorption des composés acides par mise en contact de l'effluent gazeux avec une solution absorbante comportant :

- de l'eau
- au moins un composé azoté choisi parmi les di-(hydroxyalkyl)-monoamines répondant à l'une des formules (I) et (II) suivantes :

la formule (I) étant

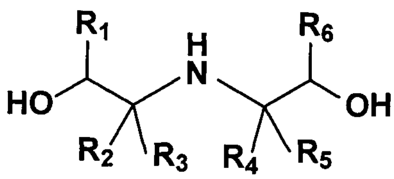
,

dans laquelle
R1 et R6 sont choisis indépendamment parmi un atome d'hydrogène et un radical alkyle renfermant de 1 à 4 atomes de carbone, et
R2, R3, R4 et R5 sont choisis indifféremment parmi un atome d'hydrogène et un radical alkyle renfermant de 1 à 4 atomes de carbone, à la condition que au moins deux des radicaux choisis parmi R2, R3, R4 et R5 soient choisis indépendamment parmi des radicaux alkyles renfermant de 1 à 4 atomes de carbone et que deux radicaux alkyles soient liés tous les deux au même atome de carbone situé en alpha de l'atome d'azote, la formule (II) étant

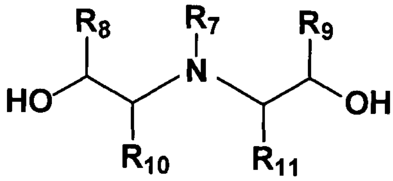
,

dans laquelle
R7 est un radical alkyle comportant entre 1 et 4 atomes de carbone,

R8 et R9 sont choisis indépendamment parmi un atome d'hydrogène et un radical alkyle renfermant de 1 à 4 atomes de carbone, et
R10 et R11 sont choisis indépendamment parmi un atome d'hydrogène et un radical alkyle renfermant de 1 à 4 atomes de carbone, à la condition que au moins un des radicaux R10 ou R11 soit un radical alkyle comportant entre 1 et 4 atomes de carbone.

Selon l'invention, le composé azoté peut être choisi parmi les composés suivants :

le N-(2'-hydroxyéthyl)-2-amino-2-méthyl-1-propanol

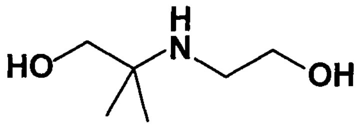

,

le N-(2'-hydroxypropyl)-2-amino-2-méthyl-1-propanol

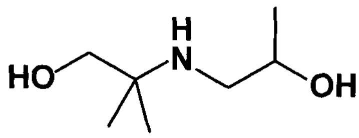

,

le N-(2'-hydroxybutyl)-2-amino-2-méthyl-1-propanol

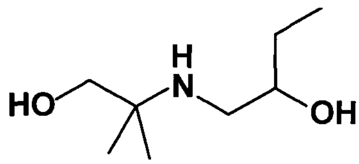

,

et

le (N-méthyl-N-hydroxyéthyl)-3-amino-2-butanol

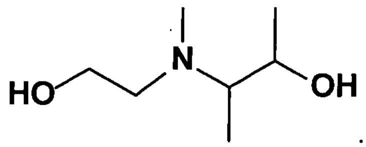

.

La solution absorbante peut comporter entre 10% et 90% poids dudit composé azoté et entre 10% et 90% poids d'eau.
La solution absorbante peut comporter, en outre, une quantité non nulle et inférieure à 20 % poids d'une amine primaire ou secondaire.
Ladite amine primaire ou secondaire peut être choisie dans le groupe constitué par :

- MonoEthanolAmine,
- N-butylethanolamine
- Aminoethylethanolamine,
- Diglycolamine,
- Pipérazine,
- N-(2-hydroxyethyl)Pipérazine,
- N-(2-aminoethyl)Pipérazine,
- Morpholine,
- 3-(metylamino)propylamine,

- 1,6-hexanediamine,
- N,N'-diméthyl-1,6-hexanediamine.

La solution absorbante peut comporter, en outre, un solvant physique choisi parmi le méthanol et le sulfolane.
L'étape d'absorption des composés acides peut être réalisée à une pression comprise entre 1 bar et 120 bars, et à une température comprise entre 20°C et 100°C.
Après l'étape d'absorption, on peut obtenir un effluent gazeux appauvri en composés acides et une solution absorbante chargée en composés acides, et on peut effectuer au moins une étape de régénération de la solution absorbante chargée en composés acides.
L'étape de régénération peut être réalisée à une pression comprise entre 1 bar et 10 bars et à une température comprise entre 100°C et 180°C.
L'effluent gazeux peut être choisi parmi le gaz naturel, les gaz de synthèse, les fumées de combustion, les gaz de raffinerie, les gaz acides issus d'une unité aux amines, les gaz issus d'une unité de réduction en queue du procédé Claus, les gaz de fermentation de biomasse, les gaz de cimenterie, les fumées d'incinérateur.
Le procédé selon l'invention peut être mis en oeuvre pour éliminer sélectivement de l'$H_2S$ par rapport au $CO_2$ d'un effluent gazeux comportant de l'$H_2S$ et du $CO_2$.
L'utilisation des composés di-(hydroxylalkyl)-monoamines selon l'invention permettent d'obtenir des capacités d'absorption des gaz acides plus importantes que les amines de référence.
Par ailleurs, les composés selon l'invention présentent une sélectivité vis-à-vis de l'$H_2S$ plus importante que les amines de référence.
D'autres caractéristiques et avantages de l'invention seront mieux compris et apparaîtront clairement à la lecture de la description faite, ci-après, en se référant à la figure 1 représentant un schéma de principe d'un procédé de traitement de gaz acides.
La présente invention propose d'éliminer les composés acides d'un effluent gazeux en mettant en oeuvre en solution aqueuse au moins un composé choisi dans le groupe des monoamines tertiaires ou secondaires possédant un encombrement stérique sévère et appartenant à la famille des di-(hydroxyalkyl)monoamines.

Composition de la solution absorbante

La solution absorbante mise en oeuvre dans le procédé selon l'invention comporte:

a - de l'eau;
b - au moins une molécule choisie dans le groupe des monoamines tertiaires ou secondaires possédant un encombrement stérique sévère de l'atome d'azote et appartenant à la famille des di-(hydroxyalkyl)monoamines.

Les di-(hydroxyalkyl)-monoamines mises en oeuvre selon l'invention sont caractérisées par un encombrement stérique sévère de l'atome d'azote qui répond à la condition particulière suivante selon que la monoamine est primaire ou secondaire:

- Dans le cas des monoamines secondaires, l'encombrement stérique de l'atome d'azote de la molécule est systématiquement renforcé par la présence d'au moins deux groupes alkyles renfermant 1 à 4 atomes de carbone qui sont liés à un des atomes de carbone situé en alpha de l'atome de manière que deux groupes alkyles soient liés tous les deux au même atome de carbone situé en alpha de l'atome d'azote.
- Dans le cas des monoamines tertiaires, l'encombrement stérique de l'atome d'azote de la molécule est systématiquement renforcé par la présence d'au moins un groupe alkyle renfermant 1 à 4 atomes de carbone qui est lié à un des atomes de carbone situés en alpha de l'atome d'azote.

Les di-(hydroxyalkyl)-monoamines secondaires mis en oeuvre selon l'invention répondent à la formule générale suivante :

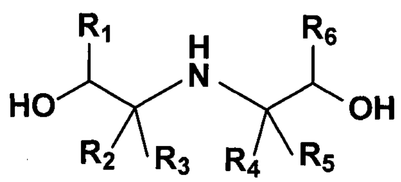

(I)

dans laquelle

R1 et R6 sont choisis indépendamment parmi un atome d'hydrogène ou un radical alkyle renfermant de 1 à 4 atomes de carbone. De préférence, R1 et R6 sont choisis indépendamment parmi un atome d'hydrogène, un radical méthyle ou un radical éthyle.
R2, R3, R4 et R5 sont choisis indépendamment parmi un atome d'hydrogène ou un radical alkyle renfermant de 1 à 4 atomes de carbone, à la condition impérative que au moins deux des radicaux choisis parmi R2, R3, R4 et R5 soient choisis indépendamment parmi des radicaux alkyles renfermant de 1 à 4 atomes de carbone. C'est cette condition qui définit un encombrement stérique sévère de l'atome d'azote d'une monoamine secondaire selon l'invention.

De préférence, R2, R3, R4 et R5 sont choisis indépendamment parmi un atome d'hydrogène, un radical méthyle ou un radical éthyle, à la condition impérative que au moins deux des radicaux choisis parmi R2, R3, R4 et R5 soient choisis indépendamment parmi un radical méthyle ou un radical éthyle. De préférence, deux radicaux parmi R2, R3, R4 et R5 sont des atomes d'hydrogène et deux radicaux choisis parmi R2, R3, R4 et R5 sont choisis indépendamment parmi un radical méthyle et un radical éthyle.
De préférence, la solution absorbante mise en oeuvre selon l'invention comporte les composés couverts par la formule (I) cités ci-après :

le N-(2'-hydroxyéthyl)-2-amino-2-méthyl-1-propanol

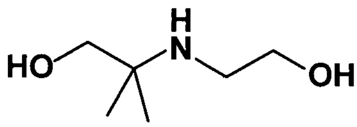
,

le N-(2'-hydroxypropyl)-2-amino-2-méthyl-1-propanol

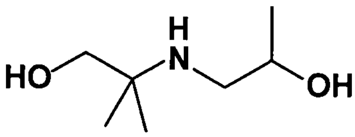
,

et

le N-(2'-hydroxybutyl)-2-amino-2-méthyl-1-propanol

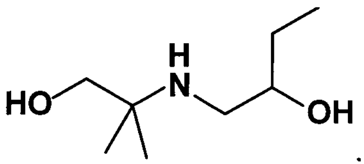
.

Les dihydroxyalkylamines tertiaires mis en oeuvre selon l'invention répondent à la formule générale suivante :

(II)

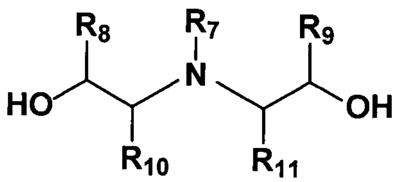

dans laquelle

R7 est impérativement un radical alkyle renfermant de 1 à 4 atomes de carbone, et de préférence un radical méthyle ou un radical éthyle

R8 et R9 sont choisis indépendamment parmi un atome d'hydrogène ou un radical alkyle renfermant de 1 à 4 atomes de carbone. De préférence, R8 et R9 sont choisis indépendamment parmi un atome d'hydrogène, un radical méthyle ou un radical éthyle.

R10 et R11 sont choisis indépendamment parmi un atome d'hydrogène, ou un radical alkyle renfermant de 1 à 4 atomes de carbone, à la condition impérative que au moins un des radicaux R10 ou R11 soit un radical alkyle renfermant de 1 à 4 atomes de carbone. C'est cette condition associée à la définition de R7 qui définit un encombrement stérique sévère de l'atome d'azote d'une monoamine tertiaire selon l'invention.

De préférence, R10 et R11 sont choisis indépendamment parmi un atome d'hydrogène, un radical méthyle ou un radical éthyle, à la condition impérative que au moins un des radicaux R10 ou R11 soit un radical méthyle ou un radical éthyle. De préférence, un des radicaux R10 ou R11 est un atome d'hydrogène et un des radicaux R10 ou R11 est un radical méthyle ou un radical éthyle.

De préférence, la solution absorbante mise en oeuvre selon l'invention comporte le composé couvert par la formule (I) cité ci-après :

le (N-méthyl-N-hydroxyéthyl)-3-amino-2-butanol

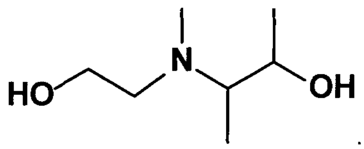

Les amines selon la formule générale (I) ou (II) peuvent être en concentration variable dans la solution absorbante, par exemple comprise entre 10% et 90% poids, de préférence entre 20% et 60% poids, de manière très préférée entre 30% et 50% poids.

La solution absorbante peut contenir entre 10% et 90% poids d'eau, de préférence entre 40% et 80% poids d'eau, de manière très préférée de 50% à 70% d'eau.

Dans un mode de réalisation, les amines selon la formule générale (I) ou (II) peuvent être formulées avec un composé, contenant au moins une fonction amine primaire ou secondaire. Par exemple, la solution absorbante comporte jusqu'à une concentration de 20% poids, de préférence inférieure à 15% poids, de préférence inférieure à 10% poids dudit composé contenant au moins une fonction amine primaire ou secondaire. De préférence, la solution absorbante comporte au moins 0,5% poids dudit composé contenant au moins une fonction amine primaire ou secondaire. Ledit composé permet d'accélérer la cinétique d'absorption du COS et, dans certains cas, du $CO_2$ contenu dans le gaz à traiter. Une liste non exhaustive de composés contenant au moins une fonction amine primaire ou secondaire qui peuvent entrer dans la formulation est donnée ci-dessous :

- Monoéthanolamine,
- N-butyléthanolamine
- Aminoéthyléthanolamine,
- Diglycolamine,
- Pipérazine,
- N-(2-hydroxyéthyl)pipérazine,
- N-(2-aminoéthyl)pipérazine,
- Morpholine,
- 3-(méthylamino)propylamine,
- 1,6-hexanediamine,
- N,N'-diméthyl-1,6-hexanediamine.

La solution absorbante peut comporter en outre un solvant physique comme par exemple le méthanol et le sulfolane.

<u>Synthèse d'une molécule selon la formule générale de l'invention</u>

On peut synthétiser les molécules de l'invention selon toute voie permise par la chimie organique. Parmi celles-ci, on peut citer sans être exhaustif les réactions d'additions de monoalcanolamines primaires ou secondaires avec des

époxydes plus ou moins substitués. Ces réactions appliquées aux composés préférés de l'invention sont représentées par les schémas suivants et appellent quelques commentaires.

Exemple de synthèse des composés couverts par la formule (I)

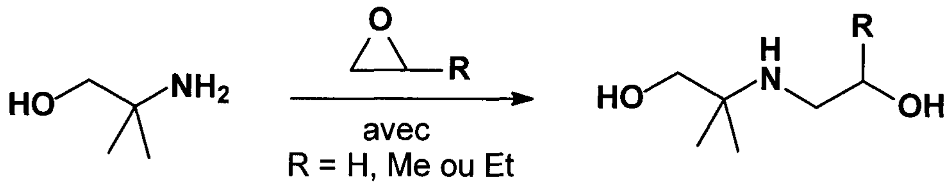


Exemple de synthèse d'un composé couvert par la formule (II)

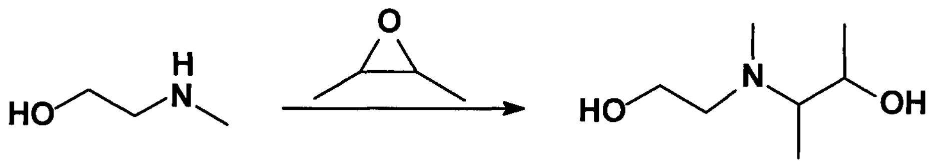

La réaction d'addition d'une amine primaire ou secondaire sur un époxyde est une réaction bien connue de la chimie organique. Elle est utilisée industriellement notamment pour fabriquer de la N-méthyléthanolamine par réaction de la méthylamine et de l'oxyde d'éthylène. Lorsque l'on souhaite à partir d'une amine primaire obtenir une alcanolamine secondaire par réaction avec un époxyde, il est recommandé d'opérer avec un excès d'amine afin de défavoriser l'obtention du composé de di-addition qui serait une amine tertiaire non souhaitée. Lorsque l'on souhaite à partir d'une amine secondaire obtenir une alcanolamine tertiaire par réaction avec un époxyde, on peut opérer avec des quantités équimolaires ou bien avec un excès de l'un ou de l'autre des réactifs. Les excès de réactifs peuvent être séparés du produit souhaité en fin de réaction et recyclés dans le procédé.

La réaction d'addition d'une amine sur un époxyde est une réaction exothermique qui requiert généralement le contrôle de la température de réaction. Elle s'effectue par exemple entre - 10°C et 140°C selon la nature et la réactivité de l'amine et de l'époxyde considéré.

Cette réaction peut s'effectuer en absence ou en présence d'un solvant. Lorsqu'un solvant est utilisé, il peut être choisi parmi les solvants conventionnels utilisés en chimie organique. Il peut s'agir par exemple mais de manière non limitative de l'eau ou d'un alcool tel le méthanol, l'éthanol ou l'isopropanol.

Cette réaction ne nécessite en général pas de catalyseur bien que certains composés tels des amines tertiaires, des sels d'ammonium quaternaires ou des dérivés métalliques puissent être utilisés.

Nature des effluents gazeux

Les solutions absorbantes selon l'invention peuvent être mises en oeuvre pour désacidifier les effluents gazeux suivants : le gaz naturel, les gaz de synthèse, les fumées de combustion, les gaz de raffinerie, les gaz acides issus d'une unité aux amines, les gaz issus d'une unité de réduction en queue du procédé Claus, les gaz de fermentation de biomasse, les gaz de cimenterie, les fumées d'incinérateur. Ces effluents gazeux contiennent un ou plusieurs des composés acides suivants : le $CO_2$, l'H2S, des mercaptans, du COS, du CS2, le SO2.

Les fumées de combustion sont produites notamment par la combustion d'hydrocarbures, de biogaz, de charbon dans une chaudière ou pour une turbine à gaz de combustion, par exemple dans le but de produire de l'électricité. A titre d'illustration, on peut mettre en oeuvre le procédé selon l'invention pour absorber au moins 70%, de préférence au moins 80% voire au moins 90% du $CO_2$ contenu dans les fumées de combustion. Ces fumées ont généralement une température comprise entre 20 et 60°C, une pression comprise entre 1 et 5 bars et peuvent comporter entre 50 et 80 % d'azote, entre 5 et 40 % de dioxyde de carbone, entre 1 et 20 % d'oxygène, et quelques impuretés comme des SOx et des NOx, s'ils n'ont pas été éliminés en amont du procédé de désacidification. En particulier, le procédé selon l'invention est particulièrement bien adapté pour absorber le $CO_2$ contenu dans des fumées de combustion comportant une faible pression partielle de $CO_2$, par exemple une pression partielle de $CO_2$ inférieure à 200 mbars.

Le procédé selon l'invention peut être mis en oeuvre pour désacidifier un gaz de synthèse. Le gaz de synthèse contient du monoxyde de carbone CO, de l'hydrogène $H_2$ (généralement dans un ratio $H_2$/CO égale à 2), de la vapeur d'eau (généralement à saturation à la température où le lavage est effectué) et du dioxyde de carbone CO2 (de l'ordre de la dizaine de pourcents). La pression est généralement comprise entre 20 et 30 bars, mais peut atteindre jusqu'à 70 bars. Il peut contenir, en outre, des impuretés soufrées ($H_2S$, COS, etc.), azotées ($NH_3$, HCN) et halogénées.

Le procédé selon l'invention peut être mis en oeuvre pour désacidifier un gaz naturel. Le gaz naturel est constitué majoritairement d'hydrocarbures gazeux, mais peut contenir plusieurs des composés acides suivants : le $CO_2$, l'$H_2S$, des mercaptans, du COS, du CS2. La teneur de ces composés acides est très variable et peut aller jusqu'à 40% pour le CO2 et l'H2S. La température du gaz naturel peut être comprise entre 20°C et 100°C. La pression du gaz naturel à traiter peut être comprise entre 10 et 120 bars. L'invention peut être mise en oeuvre pour atteindre des spécifications généralement imposées sur le gaz désacidifié, qui sont moins de 2% de $CO_2$, voire moins de 50 ppm de $CO_2$ pour réaliser ensuite une liquéfaction du gaz naturel et moins de 4 ppm d'$H_2S$, et moins de 50 ppm, voire moins de 10 ppm, volume de soufre total.

Procédé d'élimination des composés acides dans un effluent gazeux

La mise en oeuvre d'une solution aqueuse comportant un composé selon la formule générale (A) pour désacidifier un effluent gazeux est réalisée de façon schématique en effectuant une étape d'absorption suivie d'une étape de régénération, par exemple tel que représenté par la figure 1.

En référence à la figure 1, l'étape d'absorption consiste à mettre en contact l'effluent gazeux 1 avec la solution absorbante 4. L'effluent gazeux 1 est introduit en fond de C1, la solution absorbante est introduite en tête de C1. La colonne C1 est munie d'un moyen de mise en contact entre gaz et liquide, par exemple un garnissage vrac, un garnissage structuré ou des plateaux. Lors du contact, les fonctions amines des molécules selon la formule générale (A) de la solution absorbante réagissent avec les composés acides contenus dans l'effluent de manière à obtenir un effluent gazeux appauvri en composés acides 2 évacué en tête de C1 et une solution absorbante enrichie en composés acides 3 évacuée en fond de C1 pour être régénérée.

L'étape de régénération consiste notamment à chauffer et, éventuellement à détendre, la solution absorbante enrichie en composés acides afin de libérer les composés acides sous forme gazeuse. La solution absorbante enrichie en composés acides 3 est introduite dans l'échangeur de chaleur E1, où elle est réchauffée par le flux 6 provenant de la colonne de régénération C2. La solution 5 réchauffée en sortie de E1 est introduite dans la colonne de régénération C2.

La colonne de régénération C2 est équipée d'internes de mise en contact entre gaz et liquide, par exemple des plateaux, des garnissages en vrac ou structurés. Le fond de la colonne C2 est équipé d'un rebouilleur R1 qui apporte la chaleur nécessaire à la régénération en vaporisant une fraction de la solution absorbante. Dans la colonne C2, sous l'effet de la mise en contact de la solution absorbante arrivant par 5 avec la vapeur produite par le rebouilleur, les composés acides sont libérés sous forme gazeuse et évacués en tête de C2 par le conduit 7. La solution absorbante régénérée 6, c'est-à-dire appauvrie en composés acides 6 est refroidie dans E1, puis recyclée dans la colonne C1 par le conduit 4.

L'étape d'absorption des composés acides peut être réalisée à une pression dans C1 comprise entre 1 bar et 120 bars, de préférence entre 20 bars et 100 bars pour le traitement d'un gaz naturel, de préférence entre 1 bar et 3 bars pour le traitement des fumées industrielles, et à une température dans C1 comprise entre 20°C et 100°C, préférentiellement comprise entre 30°C et 90°C, voire entre 30 et 60°C.

L'étape de régénération du procédé selon l'invention peut être réalisée par régénération thermique, éventuellement complétée par une ou plusieurs étapes de détente.

La régénération peut être effectuée à une pression dans C2 comprise entre 1 bar et 5 bars, voire jusqu'à 10 bars et à une température dans C2 comprise entre 100°C et 180°C. De manière préférée, la température de régénération dans C2 est comprise entre 155°C et 180°C dans le cas où l'on souhaite réinjecter les gaz acides.

**Exemples :**

Exemple 1 : Mode opératoire de synthèse

Les exemples suivants illustrent la synthèse des molécules préférées de l'invention selon la voie de synthèse précédemment décrite, étant entendu que toutes les possibilités de synthèse de ces molécules tant au niveau des routes de synthèses que des modes opératoires possibles ne sont pas ici décrites.

N-(2'-hydroxyéthyl)-2-amino-2-méthyl-1-propanol

A une solution de 1,68 mole de 2-amino-2-méthyl-1-propanol dans 150 ml d'eau, on introduit sous agitation

en une heure 0,83 mole d'oxyde d'éthylène à une température maintenue inférieure à 20°C. On élimine ensuite l'eau et l'excès de 2-méthyl-2-amino-1-propanol par distillation et on recristallise le produit résiduel dans de l'acétate d'éthyle pour obtenir après séchage 72g de N-(2'-hydroxyéthyl)-2-amino-2-méthyl-1-propanol dont la structure est confirmée par l'analyse RMN (CDCl3) :

68,2 ppm : HO-CH2-C(CH3)2-NH-CH2-CH2-OH
53,4 ppm : HO-CH2-C(CH3)2-NH-CH2-CH2-OH
23,5 ppm : HO-CH2-C(CH3)2-NH-CH2-CH2-OH
43,3 ppm : HO-CH2-C(CH3)2-NH-CH2-CH2-OH
61,5 ppm : HO-CH2-C(CH3)2-NH-CH2-CH2-OH

N-(2'-hydroxypropyl)-2-amino-2-méthyl-1-propanol

A une solution de 1,68 mole de 2-amino-2-méthyl-1-propanol dans 300 ml d'eau, on introduit sous agitation en une heure 0,84 mole d'oxyde de propylène à une température maintenue inférieure à 25°C. On élimine ensuite l'eau et l'excès de 2-méthyl-2-amino-1-propanol par distillation et on recristallise le produit résiduel dans de l'acétate d'éthyle pour obtenir après séchage 78g de N-(2'-hydroxypropyl)-2-amino-2-méthyl-1-propanol dont la structure est confirmée par l'analyse RMN (CDCl3) :

68,3 ppm : HO-CH2-C(CH3)2-NH-CH2-CH(CH3)-OH
53,3 ppm : HO-CH2-C(CH3)2-NH-CH2-CH(CH3)-OH
23,4 et 23,8 ppm : HO-CH2-C(CH3)2-NH-CH2-CH(CH3)-OH
49,0 ppm : HO-CH2-C(CH3)2-NH-CH2-CH(CH3)-OH
66,6 ppm : HO-CH2-C(CH3)2-NH-CH2-CH(CH3)-OH
20,8 ppm : HO-CH2-C(CH3)2-NH-CH2-CH(CH3)-OH

N-(2'-hydroxybutyl)-2-amino-2-méthyl-1-propanol

A une solution de 1,11 mole de 2-amino-2-méthyl-1-propanol dans 220 ml d'eau, on introduit sous agitation en deux heures 0,55 mole de 1,2-époxybutane à une température maintenue à 40°C. On élimine ensuite l'eau et l'excès de 2-méthyl-2-amino-1-propanol par une distillation que l'on poursuit pour obtenir 72g de N-(2'-hydroxybutyl)-2-amino-2-méthyl-1-propanol dont la structure est confirmée par l'analyse RMN (CDCl3) :

68,4 ppm : HO-CH2-C(CH3)2-NH-CH2-CH(CH2-CH3)-OH
53,3 ppm : HO-CH2-C(CH3)2-NH-CH2-CH(CH2-CH3)-OH
23,7 et 23,8 ppm : HO-CH2-C(CH3)2-NH-CH2-CH(CH2-CH3)-OH
47,0 ppm : HO-CH2-C(CH3)2-NH-CH2-CH(CH2-CH3)-OH
72,0 ppm : HO-CH2-C(CH3)2-NH-CH2-CH(CH2-CH3)-OH
27,9 ppm : HO-CH2-C(CH3)2-NH-CH2-CH(CH2-CH3)-OH
9,8 ppm : HO-CH2-C(CH3)2-NH-CH2-CH(CH2-CH3)-OH

(N-méthyl-N-hydroxyéthyl)-3-amino-2-butanol

On introduit 1,23 mole de N-méthyléthanolamine et 0,62 mole de 2,3-époxybutane dans un réacteur autoclave et on porte le milieu à la température de 120°C pendant 4 heures. Après retour à la température ambiante, on procède à une distillation sous pression réduite et on recueille 78g de (N-méthyl-N-hydroxyéthyl)-3-amino-2-butanol dont la structure est confirmée par l'analyse RMN (CDCl3) :

59,0 ppm : HO-CH2-CH2-N(CH3)-CH(CH3)-CH(CH3)-OH
54,6 ppm : HO-CH2-CH2-N(CH3)-CH(CH3)-CH(CH3)-OH
36,2 ppm : HO-CH2-CH2-N(CH3)-CH(CH3)-CH(CH3)-OH
65,0 ppm : HO-CH2-CH2-N(CH3)-CH(CH3)-CH(CH3)-OH
7,3 ppm : HO-CH2-CH2-N(CH3)-CH(CH3)-CH(CH3)-OH
66,8 ppm : HO-CH2-CH2-N(CH3)-CH(CH3)-CH(CH3)-OH
18,9 ppm : HO-CH2-CH2-N(CH3)-CH(CH3)-CH(CH3)-OH

Exemple 2 : Capacité et sélectivité d'élimination de H2S d'un effluent gazeux contenant $H_2S$ et $CO_2$ par une solution d'amine de formule (I) :

On réalise un test d'absorption à 40°C sur des solutions aqueuses d'amine au sein d'un réacteur parfaitement agité ouvert coté gaz.

Pour chaque solution, l'absorption est réalisée dans un volume liquide de 50 $cm^3$ par bullage d'un courant gazeux constitué d'un mélange azote : dioxyde de carbone : hydrogène sulfuré de 89:10:1 en proportions volumiques, d'un débit de 30 NL/h pendant 90 minutes.

On mesure à l'issue du test le taux de charge en H2S obtenu ($\alpha$ =nb de moles de $H_2S$ /kg de solution absorbante) ainsi que la sélectivité d'absorption vis-à-vis du $CO_2$.

Cette sélectivité S est définie de la manière suivante :

$$S = \frac{\alpha_{H2S}}{\alpha_{CO2}} \times \frac{(\text{Concentration du mélange gazeux en } CO_2)}{(\text{Concentration du mélange gazeux en } H_2S)}$$

soit dans les conditions du test décrit ici $S = 10 \times \frac{\alpha_{H2S}}{\alpha_{CO2}}$

A titre d'exemple, on compare les taux de charge et la sélectivité entre des solutions absorbantes selon l'invention de N-(2'-hydroxyéthyl)-2-amino-2-méthyl-1-propanol, de N-(2'-hydroxypropyl)-2-amino-2-méthyl-1-propanol et de N-(2'-hydroxybutyl)-2-amino-2-méthyl-1-propanol selon la formule (I), à 50% en poids dans l'eau à une solution absorbante de Méthyldiéthanolamine (MDEA) à 47% poids dans l'eau qui constitue le solvant de référence pour une élimination sélective de $H_2S$ en traitement de gaz, ainsi qu'à une solution de diéthanolamine (DEA) à 50% en poids dans l'eau, et à une solution de 2-amino-2-méthyl-1-propanol (AMP) à 35% en poids dans l'eau. Les trois monoamines précédemment citées ne satisfaisant pas à l'invention sont indiquées à titre comparatif. La MDEA est un exemple comparatif de di-(hydroxylalkyl)-monoamine tertiaire mais où tous les groupements $R_7$ à $R_{11}$ sont des atomes d'hydrogène. La DEA est un exemple comparatif de di-(hydroxyalkyl)-monoamine secondaire mais où tous les groupements $R_1$ à $R_6$ sont des atomes d'hydrogène. L'AMP fournit un exemple de monohydroxyalkylamine primaire avec un encombrement stérique caractérisé par deux groupements méthyle sur le carbone en alpha de l'azote. Enfin les 3 exemples selon la formule (I) sont comparés à une solution absorbante de ter-butyléthanolamine (TBEA) à 50% poids dans l'eau, monoamine secondaire avec un encombrement stérique sévère de l'atome d'azote selon la formule générale du document US 4,405,581 mais qui, possédant une seule fonction alcool, n'entre pas dans la formule (I) selon l'invention.

| Composé | Concentration | T(°C) | Taux de charge en H2S (mole/kg) | Sélectivité |
|---|---|---|---|---|
| MDEA | 47% | 40 | 0,16 | 6,3 |
| DEA | 50% | 40 | 0,16 | 1,6 |
| AMP | 35% | 40 | 0,29 | 2,1 |
| TBEA (selon la formule générale du document US4,405,581) | 50% | 40 | 0,34 | 9,5 |
| N-(2'-hydroxyéthyl)-2-amino-2-méthyl-1-propanol | 50% | 40 | 0,25 | 20,0 |
| N-(2'-hydroxypropyl)-2-amino-2-méthyl-1-propanol | 50% | 40 | 0,24 | 17,7 |
| N-(2'-hydroxybutyl)-2-amino-2-méthyl-1-propanol | 50% | 40 | 0,22 | 14,4 |

Cet exemple illustre les gains en taux de charge et en sélectivité atteints avec une solution absorbante selon l'invention, comparée notamment à la MDEA ainsi qu'à la DEA et l'AMP. La comparaison à la TBEA fait apparaître un gain significatif en sélectivité.

Exemple 3 : Capacité et sélectivité d'élimination de $H_2S$ d'un effluent gazeux contenant $H_2S$ et $CO_2$ par une solution d'amine de formule (II) :

La procédure de l'exemple 2 est répétée à l'exception d'une solution absorbante de (N-méthyl-N-hydroxyéthyl)-3-amino-2-butanol selon la formule (II), à 50% en poids dans l'eau. Cette solution selon l'invention est comparée à une solution absorbante de Méthyldiéthanolamine (MDEA) à 47% poids dans l'eau qui constitue la solution absorbante de référence pour une élimination sélective de l'$H_2S$ en traitement de gaz naturel. La MDEA est un exemple comparatif de di-(hydroxylalkyl)-monoamine tertiaire mais où tous les groupements $R_7$ à $R_{11}$ sont des atomes d'hydrogène. L'exemple de solution absorbante selon l'invention est également comparé à une solution absorbante de ter-butyldiéthanolamine (TBDEA) à 50% poids dans l'eau, monoamine tertiaire avec un encombrement stérique sévère de l'atome d'azote selon la formule générale du document US 4,405,811 mais qui n'entre pas dans la formule générale (II) selon l'invention. Enfin, l'exemple selon la formule générale (II) est comparé à une solution absorbante de N-méthyl-N-(2'-hydroxyéthyl)-2-amino-2-méthyl-1-propanol à 50% poids dans l'eau, cette di-(hydroxyalkyl)-monoamine tertiaire ayant pour formule :

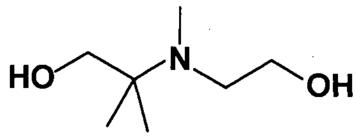

Le document GB 2 191 419A revendique l'utilisation de cette molécule dans un procédé d'élimination de composés soufrés dans le traitement du gaz naturel. Cette di-(hydroxylalkyl)-monoamine tertiaire n'entre pas dans la formule générale (II) selon l'invention.

| Composé | Concentration | T(°C) | Taux de charge en H2S (mole/kg) | Sélectivité |
|---|---|---|---|---|
| MDEA | 47% | 40 | 0,16 | 6,3 |
| TBDEA (selon la formule générale du document US 4,405,811) | 50% | 40 | 0,15 | 7,6 |
| N-méthyl-N-(2'-hydroxyéthyl)-2-amino-2-méthyl-1-propanol (selon le document GB 2191419A) | 50% | 40 | 0,03 | 3,78 |
| (N-méthyl-N-hydroxyéthyl)-3-amino-2-butanol (selon l'invention) | 50% | 40 | 0,19 | 7,6 |

Cet exemple illustre les gains en taux de charge et en sélectivité pouvant être atteints avec une solution absorbante selon l'invention, comparée notamment à la MDEA et à la N-méthyl-N-(2'-hydroxyéthyl)-2-amino-2-méthyl-1-propanol

La comparaison à la TBDEA fait apparaître un gain en capacité d'absorption de $H_2S$ pour une même sélectivité.

## Revendications

1. Procédé d'élimination des composés acides contenus dans un effluent gazeux, dans lequel on effectue une étape d'absorption des composés acides par mise en contact de l'effluent gazeux avec une solution absorbante comportant :

   - de l'eau
   - au moins un composé azoté choisi parmi les di-(hydroxyalkyl)-monoamines répondant à l'une des formules (I) et (II) suivantes :

     la formule (I) étant

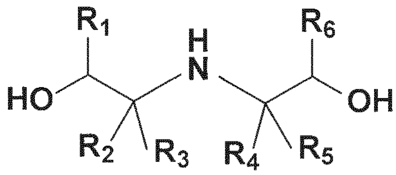

,

dans laquelle
R1 et R6 sont choisis indépendamment parmi un atome d'hydrogène et un radical alkyle renfermant de 1 à 4 atomes de carbone, et
R2, R3, R4 et R5 sont choisis indifféremment parmi un atome d'hydrogène et un radical alkyle renfermant de 1 à 4 atomes de carbone, à la condition que au moins deux des radicaux choisis parmi R2, R3, R4 et R5 soient choisis indépendamment parmi des radicaux alkyles renfermant de 1 à 4 atomes de carbone et que deux radicaux alkyles soient liés tous les deux au même atome de carbone situé en alpha de l'atome d'azote,
la formule (II) étant

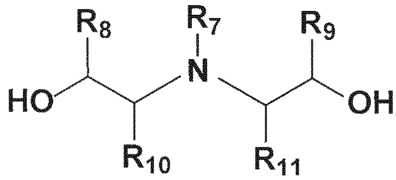

,

dans laquelle
R7 est un radical alkyle comportant entre 1 et 4 atomes de carbone,
R8 et R9 sont choisis indépendamment parmi un atome d'hydrogène et un radical alkyle renfermant de 1 à 4 atomes de carbone, et
R10 et R11 sont choisis indépendamment parmi un atome d'hydrogène et un radical alkyle renfermant de 1 à 4 atomes de carbone, à la condition que au moins un des radicaux R10 ou R11 soit un radical alkyle comportant entre 1 et 4 atomes de carbone.

**2.** Procédé selon la revendication 1, dans lequel le composé azoté est choisi parmi les composés suivants :

le N-(2'-hydroxyéthyl)-2-amino-2-méthyl-1-propanol

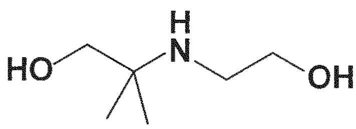

,

le N-(2'-hydroxypropyl)-2-amino-2-méthyl-1-propanol

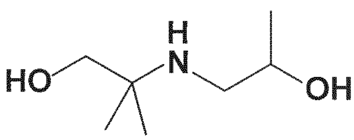

,

le N-(2'-hydroxybutyl)-2-amino-2-méthyl-1-propanol

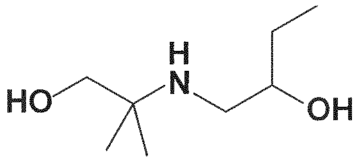

,

et
le (N-méthyl-N-hydroxyéthyl)-3-amino-2-butanol

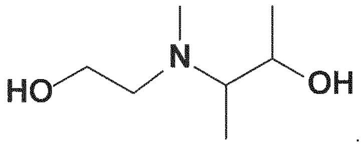

.

3. Procédé selon l'une des revendications 1 et 2, dans lequel la solution absorbante comporte entre 10% et 90% poids dudit composé azoté et entre 10% et 90% poids d'eau.

4. Procédé selon l'une des revendications précédentes dans lequel la solution absorbante comporte, en outre, une quantité non nulle et inférieure à 20 % poids d'une amine primaire ou secondaire.

5. Procédé selon la revendication 4, dans lequel ladite amine primaire ou secondaire est choisie dans le groupe constitué par :

- MonoEthanolAmine,
- N-butylethanolamine
- Aminoethylethanolamine,
- Diglycolamine,
- Pipérazine,
- N-(2-hydroxyethyl)Pipérazine,
- N-(2-aminoethyl)Pipérazine,
- Morpholine,
- 3-(metylamino)propylamine,
- 1,6-hexanediamine,
- N,N'-diméthyl-1,6-hexanediamine.

6. Procédé selon l'une des revendications précédentes, dans lequel la solution absorbante comporte, en outre, un solvant physique choisi parmi le méthanol et le sulfolane.

7. Procédé selon l'une des revendications précédentes, dans lequel l'étape d'absorption des composés acides est réalisée à une pression comprise entre 1 bar et 120 bars, et à une température comprise entre 20°C et 100°C.

8. Procédé selon l'une des revendications précédentes, dans lequel après l'étape d'absorption, on obtient un effluent gazeux appauvri en composés acides et une solution absorbante chargée en composés acides, et on effectue au moins une étape de régénération de la solution absorbante chargée en composés acides.

9. Procédé selon l'une des revendications précédentes, dans lequel l'étape de régénération est réalisée à une pression comprise entre 1 bar et 10 bars et à une température comprise entre 100°C et 180°C.

10. Procédé selon l'une des revendications précédentes, dans lequel l'effluent gazeux est choisi parmi le gaz naturel, les gaz de synthèse, les fumées de combustion, les gaz de raffinerie, les gaz acides issus d'une unité aux amines, les gaz issus d'une unité de réduction en queue du procédé Claus, les gaz de fermentation de biomasse, les gaz de cimenterie, les fumées d'incinérateur.

11. Procédé selon l'une des revendications 1 à 9, mis en oeuvre pour l'élimination sélective de l'$H_2S$ par rapport au $CO_2$ d'un effluent gazeux comportant de l'$H_2S$ et du $CO_2$.

**Patentansprüche**

1. Verfahren zum Eliminieren saurer Verbindungen, die in einem gasförmigen Abstrom enthalten sind, wobei ein Absorptionsschritt der sauren Verbindungen durch Inkontaktbringen des gasförmigen Abstroms mit einer absorbierenden Lösungdurchgeführt wird, umfassend:

    - Wasser,
    - mindestens eine Stickstoffverbindung, ausgewählt aus Di-(hydroxyalkyl)-monoaminen mit einer der folgenden Formeln (I) und (II):

    wobei die Formel (I)

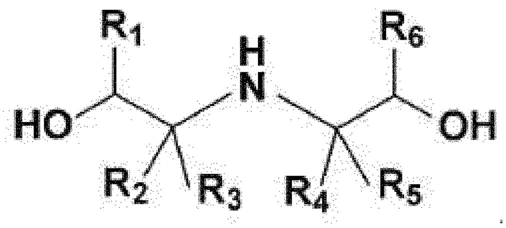

    ist, wobei
    R1 und R6 unabhängig aus einem Wasserstoffatom und einem Alkylrest mit 1 bis 4 Kohlenstoffatomen ausgewählt sind, und
    R2, R3, R4 und R5 unabhängig aus einem Wasserstoffatom und einem Alkylrest mit 1 bis 4 Kohlenstoffatomen ausgewählt sind, mit der Maßgabe, dass mindestens zwei der aus R2, R3, R4 und R5 ausgewählten Reste unabhängig aus Alkylresten mit 1 bis 4 Kohlenstoffatomen ausgewählt sind, und dass zwei Alkylreste alle beide mit demselben Kohlenstoffatom in alpha-Stellung des Stickstoffatoms verbunden sind,
    wobei die Formel (II)

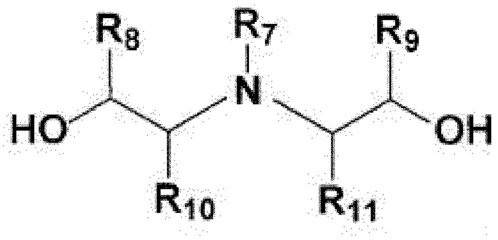

    ist, wobei
    R7 ein Alkylrest mit 1 bis 4 Kohlenstoffatomen ist,
    R8 und R9 unabhängig aus einem Wasserstoffatom und einem Alkylrest mit 1 bis 4 Kohlenstoffatomen ausgewählt sind, und
    R10 und R11 unabhängig aus einem Wasserstoffatom und einem Alkylrest mit 1 bis 4 Kohlenstoffatomen ausgewählt sind, mit der Maßgabe, dass mindestens einer der Reste R10 und R11 ein Alkylrest mit zwischen 1 und 4 Kohlenstoffatomen ist.

2. Verfahren nach Anspruch 1, wobei die Stickstoffverbindung aus den folgenden Verbindungen ausgewähltwird:

    N-(2'-Hydroxyethyl)-2-amino-2-methyl-1-propanol

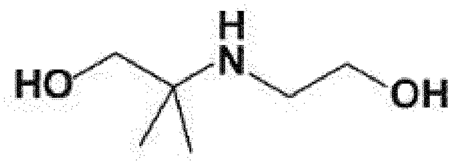

N-(2'-Hydroxypropyl)-2-amino-2-methyl-1 -propanol

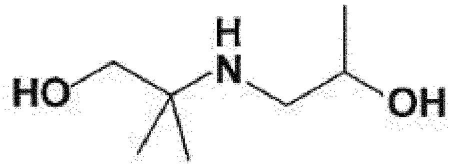

N-(2'-Hydroxybutyl)-2-amino-2-methyl-1-propanol

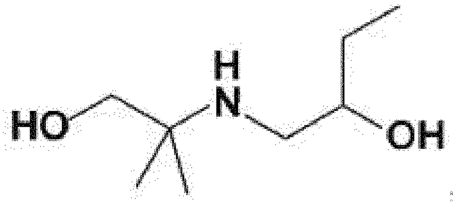

und
(N-Methyl-N-hydroxyethyl)-3-amino-2-butanol

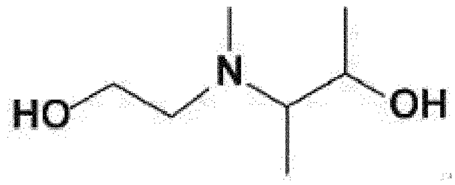

**3.** Verfahren nach einem der Ansprüche 1 und 2, wobei die absorbierende Lösungzwischen 10 Gew.-% und 90 Gew.-% der Stickstoffverbindung und zwischen 10 Gew.-% und 90 Gew.-% Wasser umfasst.

**4.** Verfahren nach einem der vorhergehenden Ansprüche, wobei die absorbierende Lösung außerdem eine Menge von nicht-Null und weniger als 20 Gew.-% eines primären oder sekundären Amins umfasst.

**5.** Verfahren nach Anspruch 4, wobei das primäre oder sekundäre Amin ausgewählt wird aus der Gruppe bestehend aus:

- Monoethanolamin,
- N-Butylethanolamin,
- Aminoethylethanolamin,
- Diglycolamin,
- Piperazin,
- N-(2-Hydroxyethyl)-piperazin,
- N-(2-Aminoethyl)-piperazin,
- Morpholin,
- 3-(Methylamino)-propylamin,
- 1,6-Hexandiamin,
- N,N'-Dimethyl-1,6-hexandiamin.

**6.** Verfahren nach einem der vorhergehenden Ansprüche, wobei die absorbierende Lösung außerdem ein physikalisches Lösungsmittelumfasst, das aus Methanol und Sulfolan ausgewählt wird.

**7.** Verfahren nach einem der vorhergehenden Ansprüche, wobei der Absorptionsschritt der sauren Verbindungen bei einem Druck zwischen 1 bar und 120 bar, und bei einer Temperaturzwischen 20°C und 100°C durchgeführt wird.

**8.** Verfahren nach einem der vorhergehenden Ansprüche, wobei nach dem Absorptionsschritt ein gasförmiger Abstrom, der an sauren Verbindungen verarmt ist, und eine absorbierende Lösung, die mit sauren Verbindungen beladen

ist, erhaltenwerden, und mindestens ein Regenerationsschritt der absorbierenden Lösung, die mit sauren Verbindungen beladen ist, durchgeführt wird.

**9.** Verfahren nach einem der vorhergehenden Ansprüche, wobei der Regenerationsschritt bei einem Druck zwischen 1 bar und 10 bar, und bei einer Temperaturzwischen 100°C und 180°C durchgeführt wird.

**10.** Verfahren nach einem der vorhergehenden Ansprüche, wobei der gasförmige Abstromausgewählt wird aus Erdgas, Synthesegas, Verbrennungsgasen, Raffineriegasen, sauren Gasen aus einer Einheit mit Aminen, Gasen aus einer Einheit zur Stufenreduktion des Claus-Prozesses, Biomassefermentationsgasen, Zementfabriksgasen, Abgasen eines Verbrennungsofens.

**11.** Verfahren nach einem der Ansprüche 1 bis 9, welches zum selektiven Eliminieren von $H_2S$ im Verhältnis zu $CO_2$ eines gasförmigen Abstroms, der $H_2S$ und $CO_2$ enthält, durchgeführt wird.

## Claims

**1.** A process for the elimination of acidic compounds contained in a gaseous effluent, in which a step for absorption of the acidic compounds is carried out by bringing the gaseous effluent into contact with an absorbent solution comprising:

- water
- at least one nitrogen-containing compound selected from di(hydroxyalkyl)monoamines having one of formulae (I) and (II) below:

formula (I) being

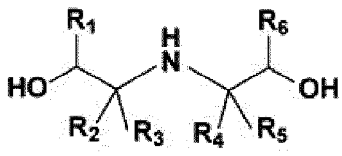
,

in which
R1 and R6 are independently selected from a hydrogen atom and an alkyl radical containing 1 to 4 carbon atoms, and
R2, R3, R4 and R5 are selected without preference from a hydrogen atom and an alkyl radical containing 1 to 4 carbon atoms, with the condition that at least two of the radicals selected from R2, R3, R4 and R5 are independently selected from alkyl radicals containing 1 to 4 carbon atoms, and that two alkyl radicals are both bonded to the same carbon atom positioned alpha to the nitrogen atom,
formula (II) being

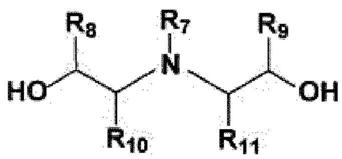
,

in which
R7 is an alkyl radical containing 1 to 4 carbon atoms,
R8 and R9 are independently selected from a hydrogen atom and an alkyl radical containing 1 to 4 carbon atoms, and
R10 and R11 are independently selected from a hydrogen atom and an alkyl radical containing 1 to 4 carbon atoms, with the condition that at least one of the radicals R10 or R11 is an alkyl radical containing 1 to 4 carbon atoms.

2. The process as claimed in claim 1, in which the nitrogen-containing compound is selected from the following compounds:

N-(2'-hydroxyethyl)-2-amino-2-methyl-1-propanol

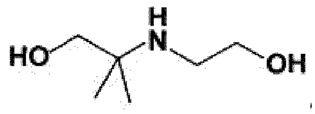

N-(2'-hydroxypropyl)-2-amino-2-methyl-l-propanol

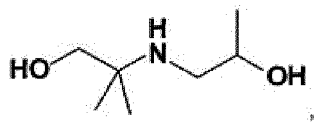

N-(2'-hydroxybutyl)-2-amino-2-methyl-1-propanol

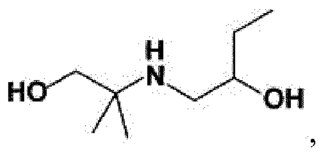

and
(N-methyl-N-hydroxyethyl)-3-amino-2-butanol

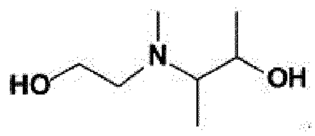

3. The process as claimed in claim 1 or claim 2, in which the absorbent solution comprises in the range 10% to 90% by weight of said nitrogen-containing compound and in the range 10% to 90% by weight of water.

4. The process as claimed in one of the preceding claims, in which the absorbent solution furthermore comprises a quantity which is not zero and which is less than 20% by weight of a primary or secondary amine.

5. The process as claimed in claim 4, in which said primary or secondary amine is selected from the group consisting of:

- monoethanolamine,
- N-butylethanolamine,
- aminoethylethanolamine,
- diglycolamine,
- piperazine,
- N-(2-hydroxyethyl)piperazine,
- N-(2-aminoethyl)piperazine,
- morpholine,
- 3-(methylamino)propylamine,
- 1,6-hexanediamine,
- N,N'-dimethyl-1,6-hexanediamine.

6. The process as claimed in one of the preceding claims, in which the absorbent solution furthermore comprises a physical solvent selected from methanol and sulpholane.

7. The process as claimed in one of the preceding claims, in which the step for absorption of the acidic compounds is

carried out at a pressure in the range 1 bar to 120 bar and at a temperature in the range 20°C to 100°C.

**8.** The process as claimed in one of the preceding claims in which, after the absorption step, a gaseous effluent which is depleted in acidic compounds and an absorbent solution which is charged with acidic compounds are obtained, and at least one step for regeneration of the absorbent solution charged with acidic compounds is carried out.

**9.** The process as claimed in one of the preceding claims, in which the regeneration step is carried out at a pressure in the range 1 bar to 10 bar and at a temperature in the range 100°C to 180°C.

**10.** The process as claimed in one of the preceding claims, in which the gaseous effluent is selected from natural gas, synthesis gases, combustion fumes, refinery gases, acidic gases obtained from an amine unit, gases obtained from a reduction unit at the tail of the Claus process, biomass fermentation gases, cement works gases and incinerator fumes.

**11.** The process as claimed in one of claims 1 to 9, carried out for the selective elimination of $H_2S$ relative to $CO_2$ in a gaseous effluent comprising $H_2S$ and $CO_2$.

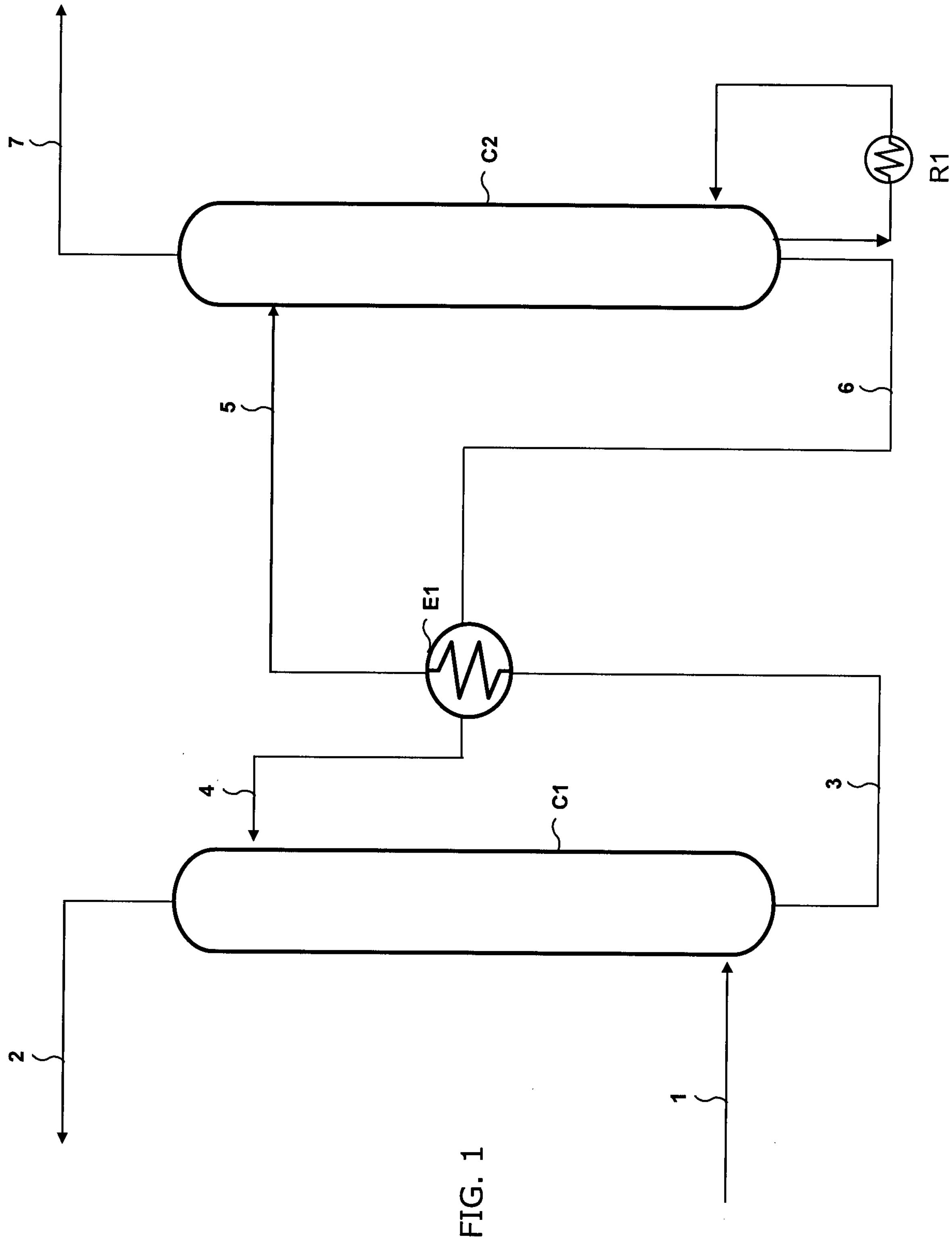


FIG. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6852144 B
- US 4405581 A
- US 4405811 A
- WO 2011121633 A
- GB 2191419 A